# EUROPÄISCHE PATENTSCHRIFT

(11) **EP 1 950 446 B1**
(45) Veröffentlichungstag und Bekanntmachung des Hinweises auf die Patenterteilung: **28.09.2011**
(21) Anmeldenummer: 08000733.9
(22) Anmeldetag: 16.01.2008
(51) Int. Cl.: F16D 25/12, F16D 25/08

(54) **Kupplungsanordnung**
Clutch assembly
Agencement d'embrayage

(30) Priorität: 23.01.2007 DE 102007003441; 05.12.2007 DE 102007058513
(43) Veröffentlichungstag der Anmeldung: 30.07.2008
(73) Patentinhaber: ZF Friedrichshafen AG, 88038 Friedrichshafen (DE)
(72) Erfinder: Greubel, Marco, 97714 Oerlenbach (DE); Abu Snima, Khalid, Dr., 97421 Schweinfurt (DE); Gross, Matthias, 97447 Gerolzhofen (DE); Jonckheere, Luc, 97493 Bergrheinfeld (DE); Reichel, Daniel, 96117 Memmelsdorf (DE)

(56) Entgegenhaltungen:
- EP-A1- 0 519 358
- EP-A1- 1 288 517
- EP-A1- 1 950 442
- EP-A2- 0 762 004
- DE-A1-102004 048 068
- GB-A- 1 586 050

## Beschreibung

Die vorliegende Erfindung betrifft eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte, und eine Betätigungskrafterzeugungsanordnung, wobei in der Eingangswelle wenigstens ein Schmierfluidkanal mit einem nach radial außen offenen Abgabeende vorgesehen ist zur Abgabe von Schmierfluid in dem Bereich der Kopplungsanordnung.

Eine derartige Kopplungsanordnung ist aus der EP 0 762 004 A2 bekannt. Diese Kopplungsanordnung weist eine über eine Kolbenbaugruppe verfügende Betätigungskrafterzeugungsanordnung auf, durch welche die beiden Gruppen von Reibelementen miteinander in Wirkverbindung bringbar sind, sobald die Betätigungskrafterzeugungsanordnung eine Axialkraft auf die Anpressplatte ausübt, welche diese auf die beiden Gruppen von Reibelementen weiterleitet. Die beiden Gruppen von Reibelementen stützen sich hierbei axial an der Widerlagerplatte ab, die somit die Axialkraft aufnimmt. Die Kopplungsanordnung ist eingerückt und damit wirksam, sobald die Kolbenbaugruppe der Betätigungskrafterzeugungsanordnung durch Beaufschlagung mit einem Überdruck an ihrer von den beiden Gruppen von Reibelementen abgewandten Seite in Richtung zur Widerlagerplatte verlagert wird. Umgekehrt wird die Kolbenbaugruppe bei fehlendem Überdruck an ihrer von den beiden Gruppen von Reibelementen abgewandten Seite mittels der Anpressplatte in ihre Ausgangslage zurückgeschoben, und damit ausgerückt, so dass die Wirkung der Kopplungsanordnung aufgehoben ist. Die Anpressplatte ist hierzu als Tellerfeder ausgebildet, die mittels entsprechender Vorspannung für einen Abhub der Kolbenbaugruppe von den beiden Gruppen von Reibelementen sorgt.

Da die Kolbenbaugruppe der Betätigungskrafterzeugungsanordnung für den Einrückvorgang einen Überdruck an ihrer von den beiden Gruppen von Reibelementen abgewandten Seite benötigt, muss dieser Überdruck für die gesamte Dauer, in welcher die beiden Gruppen von Reibelementen miteinander in Wirkverbindung verbleiben sollen, aufrecht erhalten werden, und kann nur dann ausgesetzt werden, wenn die Kopplungsvorrichtung in Ruhephasen ausgerückt werden soll. Eine solche Ansteuerung der Betätigungskrafterzeugungsanordnung ist verständlicherweise sehr energieaufwändig, und daher nach Möglichkeit zu vermeiden.

Aus der DE 80 21 411 U1 ist eine Kopplungsanordnung bekannt, über welche eine Eingangswelle eines in einem Fahrzeug vorzusehenden Kompressors zur Erzeugung von Druckluft mit einem Antriebsrad wahlweise zur gemeinsamen Drehung gekoppelt werden kann. Im Kopplungszustand kann über das von einem Antriebsaggregat zur Drehung angetriebene Antriebsrad und die Kopplungsanordnung dann auch die Eingangswelle des Kompressors zur Drehung angetrieben werden, um den Kompressor zu Betreiben.

Bei dieser bekannten Kopplungsanordnung umfasst der Kraftspeicher eine bzw. mehrere in Umfangsrichtung um eine Drehachse verteilte und in Achsrichtung wirkende Schraubendruckfedern. Diese stützen sich über einen Abstützring axial bezüglich des zweiten Reibelemententrägers ab und stützen sich über Abstütztöpfe axial an der Anpressplatte ab. Durch ihren vorgespannten Einbau pressen somit diese Schraubendruckfedern die Anpressplatte in Richtung auf die Widerlagerplatte zu, so dass zwischen der Anpressplatte und der Widerlagerplatte die alternierend angeordneten Reibelemente der beiden Gruppen von Reibelementen eingespannt werden und ein Drehmoment übertragen werden kann.

Um diese Kopplungsanordnung in einen Ausrückzustand zu bringen, also die Drehmomentübertragungsverbindung zwischen dem Antriebsrad und der Eingangswelle des Kompressors zu unterbinden, wirkt eine als Betätigungskrafterzeugungsanordnung wirksame Zylinder/Kolben-Einheit auf ein Drehentkopplungslager ein. Das Drehentkopplungslager wiederum belastet mehrere als Betätigungskraftübertragungsorgane wirksame Bolzen, welche die Widerlagerplatte und die Reibelemente der zweiten Gruppe von Reibelementen axial durchgreifen und mit der Anpressplatte axial fest gekoppelt sind. Somit kann entgegen der Vorspannwirkung der Schraubendruckfedern die Anpressplatte axial in Richtung von der Widerlagerplatte weg verschoben werden, wenn in einen Zylinderraum der Zylinder/Kolben-Einheit Druckfluid, im Allgemeinen Druckluft, eingeleitet wird und somit eine Kolbenbaugruppe der Zylinder/Kolben-Einheit das Drehentkopplungslager und somit die mit der Anpressplatte fest gekoppelten Bolzen axial verschiebt.

Es ist die Aufgabe der vorliegenden Erfindung, eine Kopplungsanordnung zur wahlweisen Drehkopplung einer Eingangswelle, insbesondere eines Kompressors in einem Fahrzeug, mit einem Antriebsorgan, insbesondere Antriebsrad, vorzusehen, welche mit möglichst geringem Energieverbrauch betrieben und zudem eine Schmierwirkung erzielt werden kann.

Erfindungsgemäß wird diese Aufgabe gelöst durch eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte, und eine Betätigungskrafterzeugungsanordnung, wobei in der Eingangswelle wenigstens ein Schmierfluidkanal mit einem Abgabeende vorgesehen ist zur Abgabe von Schmierfluid in den Bereich der Kopplungsanordnung.

Die Kopplungsanordnung ist derart ausgestaltet, dass ein Betätigungskraftübertragungsorgan in einem an der ersten axialen Seite der beiden Gruppen von Reibelementen liegenden Bereich zur Durchführung von Betätigungsvorgängen mit der Betätigungskrafterzeugungsanordnung zusammenwirkt und in einem an der zweiten axialen Seite der beiden Gruppen von Reibelementen liegenden Bereich mit dem Kraftspeicher zu dessen Betätigung zusammenwirkt, wobei das Betätigungskraftübertragungsorgan ein Schmierfluid von dem wenigstens einen Schmierfluidkanal in der Eingangswelle aufnehmendes erstes Schmierfluidreservoir begrenzt. Durch das Ausgestalten des Betätigungskraftübertragungsorgans derart, dass es auch ein Schmierfluidreservoir begrenzt, kann der Aufbau vereinfacht werden bzw. eine Funktionenverschmelzung in einem Bauteil erreicht werden.

Dabei kann beispielsweise vorgesehen sein, dass das Betätigungskraftübertragungsorgan einen das erste Schmierfluidreservoir begrenzenden ringartigen Körperbereich aufweist, von welchem wenigstens ein den zweiten Reibelemententräger axial durchgreifender Betätigungsabschnitt ausgeht.

Auch im zweiten Reibelemententräger kann eine Funktionenverschmelzung dadurch erreicht werden, dass der zweite Reibelemententräger mit einem das Betätigungskraftübertragungsorgan im Bereich des ersten Schmierfluidreservoirs umgebenden Bereich ein zweites Schmierfluidreservoir begrenzt.

Um den Fluidtransport nach radial außen zu unterstützen, wird weiter vorgeschlagen, dass im Betätigungs-kraftübertragungsorgan wenigstens eine Verbindungsöffnung eine Fluid-verbindung zwischen dem ersten Schmierfluidreservoir und dem zweiten Schmierfluidreservoir vorsieht, bzw., dass im zweiten Reibelemententräger wenigstens eine Schmierfluidabgabeöffnung vorgesehen ist zur Abgabe von Schmierfluid aus dem zweiten Schmierfluidreservoir in den Bereich der Reibelemente.

Um die Verteilungsrichtung des Schmierfluids definiert beeinflussen zu können, wird weiter vorgeschlagen, dass das erste Schmierfluidreservoir von einem Schmierfluid aus dem wenigstens einen Schmierfluidkanal in der Eingangswelle aufnehmenden axialen Bereich in Richtung zu der wenigstens einen Verbindungsöffnung sich radial erweiternd ausgebildet ist.

Weiter kann vorgesehen sein, dass das erste Schmierfluidreservoir in einem axialen Endbereich desselben, welcher dem Bereich der Zusammenwirkung des Betätigungskraftübertragungsorgans mit der Betätigungskrafterzeugungsanordnung nahe liegt, axial offen ist.

Auch das zweite Schmierfluidreservoir kann sich in derselben axialen Richtung radial erweitert ausgebildet sein, wie das erste Schmierfluidreservoir. Um auch den Bereich der gegenseitigen Lagerung der beiden Reibelemententräger bezüglich einander mit Schmierfluid ausreichend versorgen zu können, wird vorgeschlagen, dass das erste Schmierfluidreservoir oder/und das zweite Schmierfluidreservoir über eine Verbindungskanalanordnung zu dem Bereich der Lagerung des ersten Reibelemententrägers an dem zweiten Reibelemententräger offen ist. Dabei kann beispielsweise vorgesehen sein, dass die Verbindungskanalanordnung wenigstens eine Öffnung in dem zweiten Reibelemententräger umfasst, durch welche ein Betätigungsabschnitt des Betätigungskraftübertragungsorgans axial hindurchgreift.

Der wenigstens eine Schmierfluid kann nach radial außen offen sein, kann jedoch bei einer alternativen Ausgestaltungsform auch axial offen sein.

Insbesondere bei der axial offenen Ausgestaltung des wenigstens einen Schmierfluidkanals ist es vorteilhaft, wenn der zweite Reibelemententräger und die Eingangswelle durch daran jeweils vorgesehene Axialverzahnungsformationen in Drehkopplungseingriff zu bringen sind. Der wenigstens eine Schmierfluidkanal kann dann zu einer von den Axialverzahnungsformationen umgebenen Stirnfläche der Eingangswelle offen sein.

Um das aus dem wenigstens einen Schmierfluidkanal abgegebene Fluid wenigstens zum Teil zuverlässig in Richtung der miteinander in Wechselwirkung tretenden Reibelemente leiten zu können, wird vorgeschlagen, dass der zweite Reibelemententräger in einem an die Stirnfläche angrenzenden Bereich einen Hohlraum zur Aufnahme von Schmierfluid aus dem wenigstens einen Schmierfluidkanal aufweist, wobei dann weiterhin vorteilhafterweise vorgesehen sein kann, dass der Hohlraum über eine Mehrzahl erster Öffnungen nach radial außen zu dem Bereich der mit dem zweiten Reibelemententräger drehfesten Reibelemente offen ist.

Die ersten Öffnungen sind dabei vorzugsweise im axialen Bereich der Reibelemente vorgesehen, erstrecken sich also im Wesentlichen nach radial außen, ohne eine wesentliche Axialerstreckungskomponene zu haben.

Insbesondere dann, wenn die beiden Reibelemententräger aneinander gelagert sind, kann weiterhin vorgesehen sein, dass der Hohlraum über eine Mehrzahl zweiter Öffnungen zu dem Bereich der Lagerung offen ist. Dies führt zu einer definierten Zufuhr von Fluid und mithin Schmierung dieser Lagerung.

Diese zweiten Öffnungen können im axialen Bereich der Lagerung vorgesehen sein, sich also im Wesentlichen ebenfalls nach radial außen und ohne wesentliche Axialerstreckungskompontenen erstrecken.

Gemäß einem weiteren vorteilhaften Aspekt kann vorgesehen sein, dass die Axialverzahnungsformationen unter Erzeugung eines einen Fluiddurchtritt zulassenden Zwischenraums in Drehkopplungseingriff miteinander stehen. Durch die Möglichkeit, Fluid auch über diese Axialverzahnungsformationen hinweg nach radial außen zu führen, wird eine weitere Verzweigung des Fluidstroms und mithin eine weitere Verbesserung der Schmierwirkung erlangt.

Bei einer hinsichtlich des Aufbaus besonders einfachen und auch kostengünstigen Ausgestaltungsform kann vorgesehen sein, dass der erste Reibelemententräger über eine Gleitlageranordnung am zweiten Reibelemententräger gelagert ist.

Die vorliegende Erfindung wird nachfolgend mit Bezug auf die beiliegenden Figuren detailliert beschrieben. Es zeigt:
- Fig. 1: eine Längsschnittansicht einer erfindungsgemäß aufgebauten Kopplungsanordnung;
- Fig. 2: eine perspektivische Ansicht eines bei der Kopplungsanordnung der Fig. 1 eingesetzten Druckrings;
- Fig. 3: eine der Fig. 2 entsprechende Darstellung eines alternativ aus- gestalteten Druckrings;
- Fig. 4: die Eingliederung einer Kopplungsanordnung in einem Kom- pressor;
- Fig. 5: das Detail V in Fig. 4 vergrößert;
- Fig. 6: eine Längsschnittansicht einer alternativ aufgebauten Kopplungsanordnung;
- Fig. 7: eine der Fig. 6 entsprechende Ansicht einer weiteren alternativ aufgebauten Kopplungsanordnung.

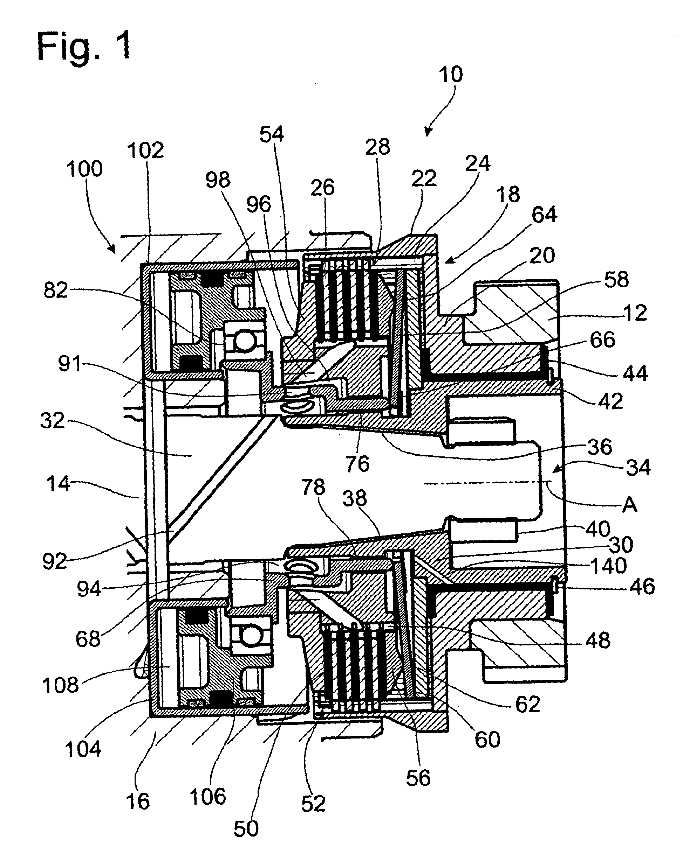

In Fig. 1 ist eine erfindungsgemäß aufgebaute Kopplungsanordnung allgemein mit 10 bezeichnet. Diese Kopplungsanordnung 10 dient dazu, wahlweise eine Drehkopplung zwischen einem beispielsweise als Zahnrad ausgestalteten Antriebsrad 12 und einer Eingangswelle 14 eines Kompressors herzustellen. Ein derartiger Kompressor kann in einem Fahrzeug, beispielsweise Lastkraftwagen, eingesetzt sein, um für verschiedene mit Druckluft zu betreibende Systembereiche die erforderliche Druckluft zu generieren. Dabei ist die Eingangswelle 14, die bei einem derartigen Kompressor als Kurbelwelle ausgebildet sein kann, in einem Gehäuse 16 aufgenommen und darin auch durch nicht dargestellte Lager radial und axial gelagert.

Die Kopplungsanordnung 10 umfasst einen ersten Reibelemententräger 18. Dieser ist zweiteilig aufgebaut und trägt mit einem ersten Teil 20 das Antriebsrad 12. Die Verbindung zwischen diesem ersten Teil 20 des ersten Reibelemententrägers 18 und dem Antriebsrad 12 kann beispielsweise durch Klemmsitz, Verschweißung oder in sonstiger Weise realisiert sein.

Ein radial außen mit dem ersten Teil 20 fest verbundenes zweites Teil 22 des ersten Reibelemententrägers 18 ist im Wesentlichen zylindrisch ausgestaltet und weist an seiner Innenumfangsfläche eine Verzahnung 24 auf, mit welcher die Reibelemente 26 einer ersten Gruppe 28 von Reibelementen mit entsprechenden Verzahnungen in Drehkopplungseingriff stehen, jedoch bezüglich des zweiten Teils 22 bzw. des ersten Reibelemententrägers 18 in Richtung einer Drehachse A bewegbar sind.

Ein zweiter Reibelemententräger 30 ist mit der Eingangswelle 14 drehfest verbunden. Dazu kann die Eingangswelle 14 an ihrem mit dem Antriebsrad 12 zu koppelnden Endbereich 32 einen konisch sich in Richtung zum freien Ende 34 der Eingangswelle 14 verjüngenden Abschnitt 36 aufweisen, auf welchen der zweite Reibelemententräger 30 mit einer entsprechend konisch geformten Innenöffnung 38 aufgesetzt und durch eine Fixiermutter 40 fixiert ist. Auf diese Art und Weise wird ein drehfester Klemmsitz erzeugt. In einem auch über das freie Ende 34 der Eingangswelle 14 sich hinaus erstreckenden Lagerabschnitt 42 des zweiten Reibelemententrägers 30 ist über eine Axial/Radial-Lageranordnung 44 der erste Reibelemententräger 18, nämlich dessen erstes Teil 20, axial und radial gelagert. Diese Lageranordnung 44 kann als Gleitlageranordnung ausgebildet sein, die in einer axialen Richtung durch einen Sicherungsring 46 bezüglich des zweiten Reibelemententrägers 30 fixiert ist.

Der zweite Reibelemententräger 30 weist eine Außenverzahung 48 auf, mit welcher die Reibelemente 50 einer zweiten Gruppe 52 von Reibelementen drehfest gekoppelt sind, jedoch bezüglich des zweiten Reibelemententrägers 30 axial bewegbar sind. Man erkennt, dass jeweils Reibelemente 26 der ersten Gruppe 28 von Reibelementen und Reibelemente 50 der zweite Gruppe 52 von Reibelementen einander alternierend abwechseln.

Der zweite Reibelemententräger 30 kann, wie dies in der Fig. 1 auch erkennbar ist, einteilig ausgebildet sein, also an einem Bauteil sowohl die Verzahnung 48 zur Kopplung mit den Reibelementen 50, den sich verjüngenden Abschnitt 36 und den über die Lageranordnung 44 den ersten Reibelemententräger 18 tragenden Abschnitt aufweisen. Es ist selbstverständlich, dass auch der zweite Reibelemententräger 30 aus mehreren Teilen zusammengefügt sein kann, wie dies beim ersten Reibelemententräger 18 der Fall ist.

Mit dem zweiten Reibelemententräger 30 ist ferner eine Widerlagerplatte 54 fest verbunden. Diese ist an einer vom freien Ende 34 abgewandt liegenden axialen Seite der beiden Gruppen 28, 52 von Reibelementen angeordnet und bildet die axiale Abstützung für die Reibelemente 26, 50. An der anderen axialen Seite, also der dem freien Ende 34 der Eingangswelle 14 zugewandt liegenden axialen Seite der beiden Gruppen 28, 52 von Reibelementen, ist eine Anpressplatte 56 angeordnet. Diese kann beispielsweise, ähnlich wie die Reibelemente 50, mit dem zweiten Reibelemententräger 30 drehfest gekoppelt sein, bezüglich diesem jedoch axial bewegbar sein. Ein als Membranfeder oder Tellerfeder ausgestalteter Kraftspeicher 58 beaufschlagt die Anpressplatte 56 in axialer Richtung und presst diese auf die Reibelemente 26, 50 zu. Dadurch werden diese gegeneinander gepresst und somit in Reibeingriff gebracht. Die Abstützkraft liefert, wie bereits erwähnt, die Widerlagerplatte 54.

Der Kraftspeicher 58 ist radial außen in einem Abstützbereich 60 desselben an einem ringartigen Abstützelement 62 axial abgestützt, das radial innen an einer Schulter des zweiten Reibelements 30 abgestützt ist bzw. mit dem zweiten Reibelemententräger 30 fest gekoppelt ist. Durch das Abstützelement 62 ist gleichzeitig auch eine Arretierung der Lageranordnung 44 in der anderen axialen Richtung realisiert.

In einem radial weiter innen liegenden Beaufschlagungsbereich 64 beaufschlagt der Kraftspeicher 58 die Anpressplatte 56 und presst diese somit gegen die Reibelemente 26, 50. In seinem radial inneren Endbereich weist der ringartig ausgestaltete Kraftspeicher 58 einen Betätigungsbereich 66 auf, in welchem dieser durch einen als Betätigungskraftübertragungsorgan wirksamen Druckring 68 betätigt bzw. eine Ausrückkraft in diesen eingeleitet werden kann.

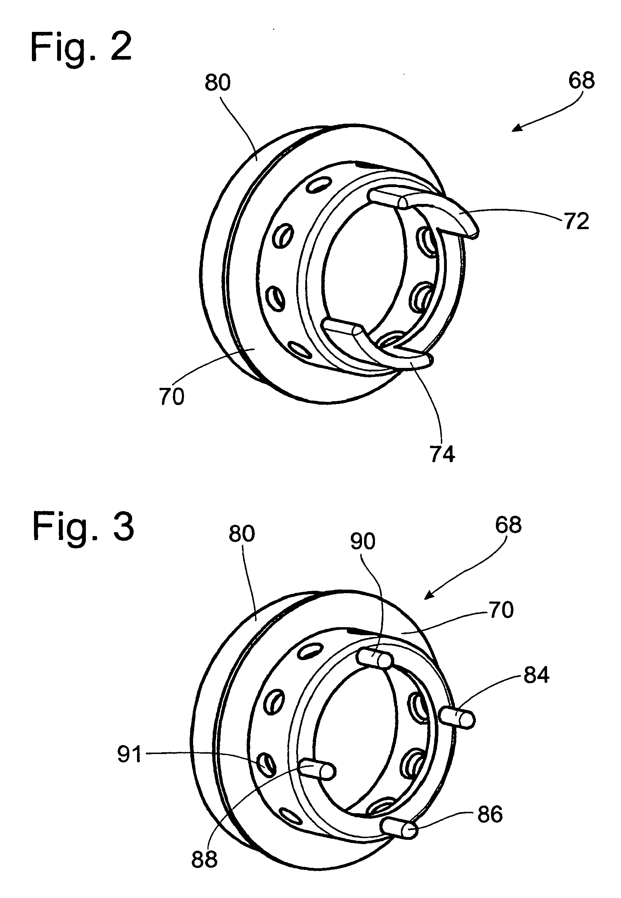

Ein Beispiel eines derartigen Druckrings 68 ist in Fig. 2 gezeigt. Dieser weist einen ringartigen Körperbereich 70 auf, von welchem zwei ringsegmentartige Betätigungsabschnitte 72, 74 sich axial weg erstrecken. Diese durchgreifen Öffnungen 76 bzw. 78 im zweiten Reibelemententräger 30. Mit seinem an der dem freien Ende 34 zugewandten axialen Seite der beiden Gruppen 28, 52 von Reibelementen liegenden Bereich, also einem jeweiligen axialen Endbereich der Betätigungsabschnitte 72, 74, belastet der Druckring 68 den Betätigungsbereich 66 des Kraftspeichers 58. In seinem anderen axialen Endbereich weist der Druckring 68 einen Lagerungsabschnitt 80 auf, in welchem dieser an einem in Fig. 1 erkennbaren Drehentkopplungslager 82 axial bzw. auch radial abgestützt ist.

Es sei hier noch auf die Fig. 3 verwiesen, welche eine alternative Ausgestaltungsform eines derartigen Druckrings 68 zeigt. Hier gehen vom ringartigen Körperabschnitt 70 vier in gleichmäßigem Umfangsabstand zueinander angeordnete Bolzen 84, 86, 88, 90 aus, welche entsprechende Öffnungen im zweiten Reibelemententräger 30 durchsetzen und auf den Betätigungsbereich 66 des Kraftspeichers 58 einwirken.

Man erkennt weiterhin, dass in dem ringartigen Körperabschnitt 70 des Druckrings 68 Öffnungen 91 gebildet sind. Schmierfluid, welches durch einen in der Eingangswelle 14 ausgebildeten Schmierfluidkanal 92 in ein durch den Druckring 68 nach radial außen begrenztes erstes Schmierfluidreservoir 94 gelangt, kann durch diese Öffnungen 91 hindurch in ein durch den zweiten Reibelemententräger 30 nach radial außen begrenztes zweites Schmierfluidreservoir 96 gelangen und von dort durch Öffnungen 98 in den Bereich der Reibelemente 26, 50.

Eine allgemein mit 100 bezeichnete Betätigungskrafterzeugungsanordnung umfasst eine Zylinder/Kolben-Einheit 102 mit einer Zylinderbaugruppe 104 und einer Kolbenbaugruppe 106. Die Zylinder/Kolben-Einheit 102 ist ringartig und die Eingangswelle 14 umgebend aufgebaut und weist eine ringartige Zylinderkammer 108 auf, in welche ein Druckfluid, also beispielsweise Druckluft, eingespeist werden kann. Die Kolbenbaugruppe 106, welche fluiddicht in der Zylinderbaugruppe 104 axial verschiebbar aufgenommen ist, wirkt über das Drehentkopplungslager 82 mit dem Druckring 68 zusammen. Bei Einleitung von Druckfluid in die Zylinderkammer 108 wird die Kolbenbaugruppe 106 axial verschoben. Über das Drehentkopplungslager 82 wird somit auch der Druckring 68 axial in der Darstellung der Fig. 1 nach rechts, also in Richtung auf den Kraftspeicher 58 zu, verschoben. Dabei belasten die Betätigungsabschnitte 72, 74 den Betätigungsbereich 66 des Kraftspeichers 58 und schieben diesen in Richtung auf das freie Ende 34 zu. Entsprechend bewegt sich auch durch die Abstützung radial ganz außen der Beaufschlagungsbereich 64 in Richtung von der Widerlagerplatte 54 weg, so dass die Beaufschlagung der Anpressplatte 56 gemindert bzw. aufgehoben wird. Dies hat zur Folge, dass auch der Reibeingriff der Reibelemente 26, 52 entsprechend gemindert wird und somit die Kopplungsanordnung 10 in einen Ausrückzustand gebracht werden kann.

Auf Grund der Ausgestaltung des Kraftspeichers 58 als einseitig wirkender Hebel werden sehr günstige Kratftverhätnisse erhalten. Einerseits ist es möglich, den Kraftspeicher 58 sehr stark vorgespannt einzubauen, so dass der näher am Abstützbereich 60 als am Betätigungsbereich 66 liegende Beaufschlagungsbereich 64 eine entsprechend starke Einrückkraft auf die Anpressplatte 56 ausübt. Da für die Betätigung zum Ausrücken eine sehr große Hebellänge realisiert ist, kann auch bei stark vorgespanntem Einbau bzw. entsprechend starker Einrückkraft mit vergleichsweise geringer Ausrückkraft gearbeitet werden. Dies führt zu einer deutlich geringeren Belastung der Betätigungskrafterzeugungsanordnung 100 zur Erzeugung der Betätigungskraft und ermöglicht einen entsprechend einfachen Aufbau. Ferner wird es möglich, durch die erzielbare große Einrückkraft bei vergleichsweise geringer erforderlicher Ausrückkraft die erforderlichen Drehmomente auch mit geringerer Anzahl an Reibflächen, also geringerer Anzahl an Reibelementen, zu übertragen, was zu einer kompakten Bauweise beiträgt.

Ein weiterer Vorteil der geringeren Betätigungskraft bzw. Ausrückkraft ist, dass das zwischen dem Druckring 68 und der Kolbenbaugruppe 106 wirkende Drehentkopplungslager 82 auch nur weniger stark axial belastet wird und überdies nur dann belastet wird, wenn Ausrückvorgänge durchzuführen sind. Dies hat zur Folge, dass dieses Drehentkopplungslager 82 nicht notwendigerweise als Wälzkörperlager ausgebildet sein muss, wie es in der Fig. 1 gezeigt ist, sondern beispielsweise auch als Gleitlager mit einer Anlaufscheibe ausgebildet sein kann, was zu einer geringeren axialen Baugröße führt.

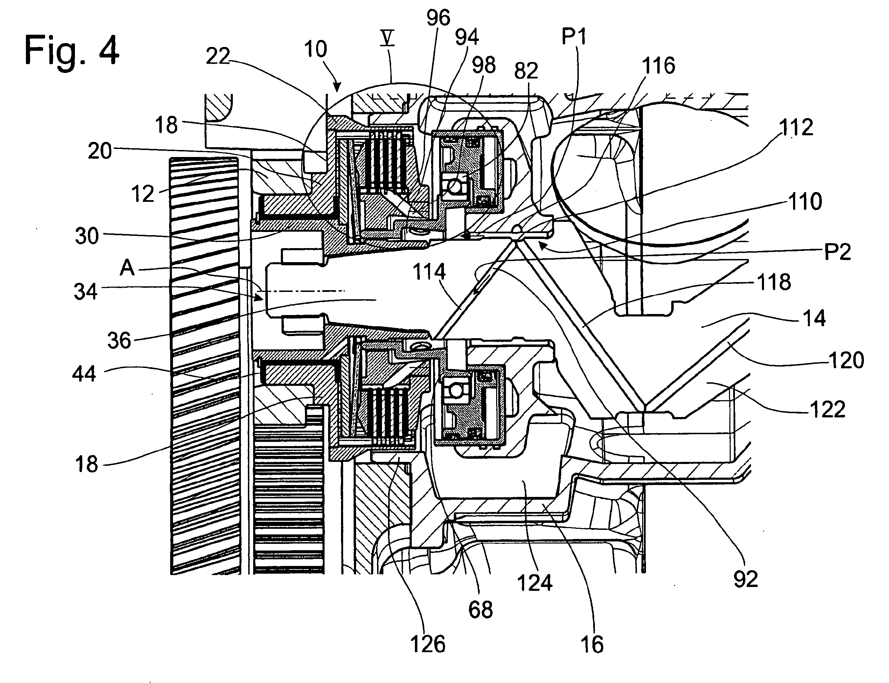

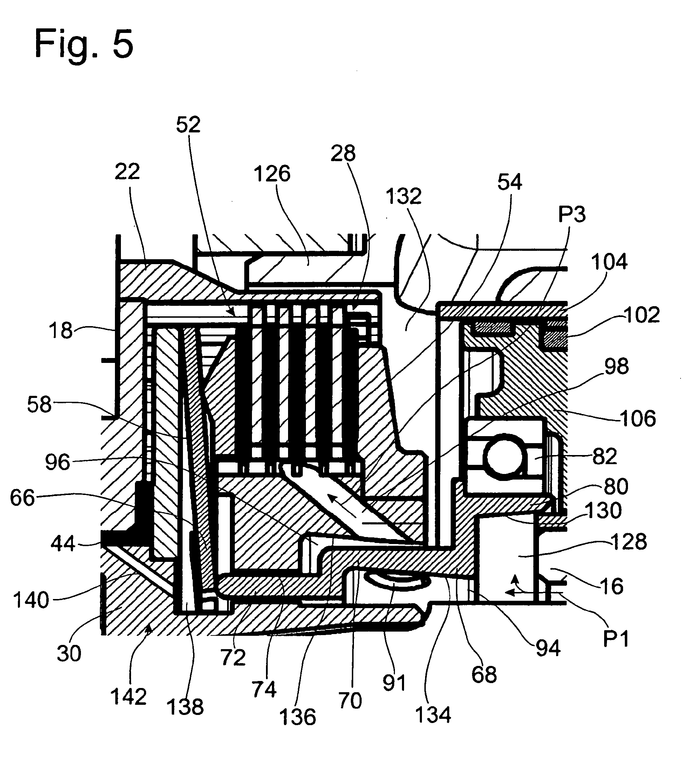

Die vorangehend schon angesprochene Zufuhr von Schmierfluid, also beispielsweise Schmieröl, in den Bereich der Kopplungsanordnung 10 wird nachfolgend mit Bezug auf die Fig. 4 und 5 detaillierter erläutert.

Man erkennt in der Darstellung der Fig. 4, dass der in der als Kurbelwelle ausgebildeten Eingangswelle 14 vorgesehene Schmierfluidkanal 92 sich ausgehend von einem Bereich 110, in welchem die Eingangswelle 14 über ein nicht dargestelltes Lager, z.B. Gleitlager, an dem Gehäuse 16 radial gelagert ist, sich von einer in diesem Bereich gebildeten Umfangsnut 112 in der Eingangswelle 14 geneigt in Richtung zum freien Ende 34 hin erstreckt und im Bereich einer Öffnung 114 endet, die in axialer Richtung überlappt ist von dem durch den Druckring 68 nach radial außen begrenzten ersten Schmierfluidreservoir 94. Dort, wo in der Eingangswelle 14 die Umfangsnut 110 ausgebildet ist, ist zumindest an Umfangsbereichen auch am Gehäuse 16 eine Umfangsnut 116 vorhanden, in die an nicht dargestellter Positionierung ein Schmierfluidzuführkanal einmündet. Das über diesen Kanal zugeführte Schmierfluid verteilt sich in Umfangsrichtung in der Umfangsnut 116 und gelangt durch in dem nicht dargestellten Gleitlager ausgebildete Öffnungen auch in den Bereich der Umfangsnut 110 und somit in den Schmierfluidkanal 92. Ein Teil des über die Umfangsnut 116 zugeführten Schmierfluids gelangt auch in weitere in Richtung Gehäuseinnenbereiche sich erstreckende Schmierfluidkanäle 118 bzw. 120, die Schmierfluid zu den Kurbelbereichen 122 der Eingangswelle 14 und auch anderen Lagerbereichen zu führen, um dort für ausreichende Schmierung zu sorgen.

Das auf diese Art und Weise im Inneren des Gehäuses 16 an Lagerstellen verteilte bzw. abgegebene Schmierfluid wird sich in einem Bodenbereich des Gehäuses 16 sammeln und über eine in der Fig. 4 erkennbare Ableitöffnung 124 aus dem Gehäuse 16 austreten. Das durch diese Ableitöffnung 124 austretende Schmierfluid wird sich in der Darstellung der Fig. 4 nach links, also in Richtung zur Kopplungsanordnung 10 bewegen und dort zwischen einem zylindrischen Endbereich 126 des Gehäuses 16 und dem Außenumfangsbereich des ersten Reibelemententrägers 18 austreten und in einen Schmierfluidsumpf gelangen.

Ein Teil des über die Umfangsnut 116 zugeführten Schmierfluids wird nicht durch das Gleitlager hindurch zur Umfangsnut 110 in der Eingangswelle 14 gelangen, sondern wird an der Außenseite des nicht dargestellten Gleitlagers sich in Richtung aus dem Gehäuse heraus bewegen, in der Darstellung der Fig. 4 also von der Umfangsnut 116 weg nach links. Dies ist durch einen Pfeil P1 in Fig. 4 und auch in Fig. 5 verdeutlicht. Dieser Schmierfluidstrom ist als Leckagestrom zu betrachten und daher hinsichtlich seiner Menge vergleichsweise unbestimmbar. Dieser Leckagestrom bzw. der Schmierfluidstrom gelangt in einen Raumbereich 128 der nach radial außen hin begrenzt ist durch den Lagerungsabschnitt 80 des Druckrings 68. Auf diesem Lagerungsabschnitt 68 sitzt radial außen das Drehentkopplungslager 82. Man erkennt, dass der Lagerungsabschnitt 80 mit einer Innenumfangsfläche 130 den Raumbereich 128 nach radial außen begrenzt, wobei diese Innenumfangsfläche 130 in Richtung zu dem freien Endbereich des Druckrings 68 sich radial erweiternd ausgebildet ist. Dies führt dazu, dass derjenige Teil des Schmierfluidstroms P1, der in den Raumbereich 128 eintritt, sich an dieser Innenumfangsfläche 130 ansammeln wird und aufgrund dessen Neigung nach radial außen in Richtung zum freien Ende wandern wird. Dort wird er dann nach Erreichen des Endes des Druckrings 68 weiter nach radial außen bewegt, so dass er, auch geführt durch die Formgebung der Kolbenbaugruppe 106, in den Bereich des Drehentkopplungslagers 82 gelangt und dieses schmiert. Nach Durchströmung des Drehentkopplungslagers 82 gelangt dieser Schmierfluidstrom dann in einen Raumbereich 132, der im Wesentlichen außerhalb der Widerlagerplatte 54 und des ersten Reibelemententrägers 18 gebildet ist, so dass dieses Schmierfluid dann wieder zwischen dem Endbereich 126 des Gehäuses 16 und dem ersten Reibelemententräger 18 hindurch in den Schmierfluidsumpf gelangen kann.

Der nicht in den Raumbereich 128 nach radial außen tretende Anteil des Schmierfluidstroms P1 wird zusammen mit dem durch den Schmierfluidkanal 92 strömenden Schmierfluidstrom P2 in das durch den Druckring 68 nach radial außen begrenzte erste Schmierfluidreservoir 94 gelangen. Man erkennt vor allem in Fig. 5, dass der ringartige Körperbereich 70 des Druckrings 68 dort, wo er das erste Schmierfluidreservoir 94 nach radial außen begrenzt, ebenfalls sich radial erweiternd ausgebildet ist, und zwar von demjenigen Bereich, in welchem die Öffnung 114 des Schmierfluidkanals 92 liegt, zu den Verbindungsöffnungen 91 sich radial erweiternd. Das heißt, sowohl das mit dem Schmierfluidstrom P1 über das axial offene Ende des ersten Schmierfluidreservoirs 94 in dieses gelangende Schmierfluid, als auch das als Schmierfluidstrom P2 von radial innen in das erste Schmierfluidreservoir 94 gelangende Schmierfluid wird vor allem im Rotationsbetrieb fliehkraftbedingt entlang der sich erweiternden Innenoberfläche 134 zu den Verbindungsöffnungen 91 bzw. zum anderen axialen Ende des ersten Schmierfluidreservoirs 94 gelangen. Der Schmierfluidanteil, der durch die Verbindungsöffnungen 91 hindurchtritt, wird in das zweite Schmierfluidreservoir 96 gelangen, das durch den zweiten Reibelemententräger 30 nach radial außen begrenzt ist. Auch hier ist eine Innenoberfläche 136 vorgesehen, die in axialer Richtung betrachtet nach radial außen sich erweiternd ausgebildet ist, und zwar in der gleichen Richtung, wie die Innenoberfläche 134. Dies hat zur Folge, dass ein Teil des durch die Verbindungsöffnungen 91 hindurchtretenden Schmierfluids als Schmierfluidstrom P3 durch die Öffnungen 98 nach radial außen in den Bereich der beiden Gruppen 52 und 28 von Reibelementen gelangen wird und somit diese schmieren wird. Das Schmierfluid wird sich dann radial außen am zweiten Teil 22 des ersten Reibelemententrägers 18 ansammeln und ebenfalls in den Raumbereich 132 und von diesem in den Schmierfluidsumpf gelangen.

Derjenige Anteil des in das zweite Schmierfluidreservoir 96 gelangten Schmierfluids, der nicht über die Öffnungen 98 nach radial außen bewegt wird, wird sich bedingt durch die radiale Erweiterung der Innenoberfläche 136 in der Fig. 5 nach links bewegen und in denjenigen Bereich des zweiten Reibelemententrägers 30 gelangen, in welchem auch die Durchgriffsöffnungen für die Betätigungsabschnitte des Druckrings 68 gebildet sind. In Fig. 5 ist hiervon der Betätigungsabschnitt 72 gezeigt, der die Durchgriffsöffnung 74 im zweiten Reibelemententräger 30 durchgreift. Da dieser Durchgriff mit ausreichend Bewegungsspiel erfolgt, ist sowohl das erste Schmierfluidreservoir 94 als auch das zweite Schmierfluidreservoir 96 an dem dem freien Ende 34 der Eingangswelle 14 nahe liegenden Endbereich derselben nicht dicht abgeschlossen, sondern für den Austritt vom Schmierfluid offen. Aufgrund der vorangehend angesprochenen Erweiterung der Umfangsflächen 134, 136 ist hier ein Fördereffekt bzw. Pumpeffekt vorhanden, der immer für ausreichend Nachlieferung von Schmierfluid sorgt. Das durch eine derartige Durchgriffsöffnung 74 hindurchgetretene Schmierfluid gelangt dann in einen ringartigen Raumbereich 138, der im Wesentlichen vom zweiten Reibelemententräger 30 umschlossen ist und nach radial außen offen ist und in welchen der Kraftspeicher 58 mit seinem radial inneren Bereich, und insbesondere dem Betätigungsbereich 66 sich zur Wechselwirkung mit dem Druckring 68 hineinerstreckt. Im zweiten Reibelemententräger 30 sind in Umfangsrichtung um die Drehachse A verteilt vorzugsweise mehrere Kanäle 140 gebildet, welche von dem Raumbereich 138 in den Bereich der Lageranordnung 44 führen. Dies bedeutet, dass insbesondere auch aufgrund der Neigung dieser Kanäle 140 in Richtung vom Raumbereich 138 weg nach radial außen in dem Raumbereich 138 vorhandenes Schmierfluid durch diese Kanäle 140 in den Bereich der Lageranordnung 44 gelangt und somit dort für Schmierung sorgt. Das auf diese Art und Weise in den Bereich der Lageranordnung 44 geförderte Schmierfluid wird sich dann in der Darstellung der Fig. 4 bzw. auch der Fig. 5 weiter nach links bewegen und nach seinem Austritt ebenfalls in den Schmierfluidsumpf gelangen. Dabei bilden also die Durchgriffsöffnungen, von welchen in Fig. 5 nur die Durchgriffsöffnung 74 erkennbar ist, der Raumbereich 138 und die Kanäle 140 eine Verbindungskanalanordnung 142, welche eine Verbindung zwischen den beiden Schmierfluidreservoirs 94, 96 und der zu schmierenden Lagerungsanordnung 44 herstellt.

Durch die erfindungsgemäße Ausgestaltung der Kopplungsanordnung insbesondere hinsichtlich der Zuführung und Verteilung von Schmierfluid wird es möglich, die verschiedenen reibungsmäßig belasteten Baugruppen der Kopplungsanordnung 10 ausreichend und zuverlässig zu schmieren. Von besonderem Vorteil ist dabei, dass eine hohe Variabilität in den Strömungsrichtungen vorhanden sind, da vor allem die verschiedenen Strömungsbereiche bzw. Strömungswege und Schmierfluidreservoirs nicht fluiddicht abgeschlossen sind. Dies hat zur Folge, dass beispielsweise das durch den Raumbereich bzw. die Öffnung 124 hindurchgelangende Schmierfluid auch in den Bereich der Reibelemente 26, 50 gelangen kann, nämlich indem es am axialen Endbereich des zweiten Teils 22 des ersten Reibelemententrägers 18 nach radial innen gelangt durch einen Zwischenraum zwischen diesem zweiten Teil 22 und der Widerlagerplatte 54. Weiter kann selbstverständlich das als Schmierfluidstrom P2 in das erste Schmierfluidreservoir 94 gelangende Schmierfluid teilweise aus dem axial offenen Ende des ersten Schmierfluidreservoirs 94 austreten und in den Raumbereich 128 gelangen, wo es, auch bedingt durch die schräge Innenoberfläche 130 des Druckrings 68 dann in den Bereich des Drehentkopplungslagers 82 gefördert wird und dieses schmieren kann.

Ein Teil des über die Öffnungen 98 nach radial außen in den Bereich der Reibelemente 26, 50 gelangenden Schmierfluid kann auch entlang des zweiten Teils 22 des ersten Reibelemententrägers 18 in Richtung zum ersten Teil 20 desselben gelangen und entlang eines zwischen diesem ersten Teil 20 und dem Ringelement 62 gebildeten Zwischenraums nach radial innen in den Bereich der Lageranordnung 44 strömen. Die jeweilige Strömungsrichtung wird sich abhängig davon auch ergeben, ob das System im Betrieb ist, also die mit der Eingangswelle 14 verbundenen Komponenten rotieren, oder ob die Kopplungsanordnung 10 in einem Ausrückzustand ist, so dass verstärkt auch Fliehkrafteinwirkungen dazu führen, dass das Schmierfluid sich über die verschiedenen Raumbereiche zu den zu schmierenden Baugruppen gelangen kann.

Alle Schmierfluidströme gelangen letztendlich aus dem Bereich der Kopplungsanordnung 10 heraus und können in einem unterhalb des Gehäuses 16 angeordneten Schmierfluidsumpf gesammelt werden und von dort wieder in den Schmierkreislauf rückgeführt werden.

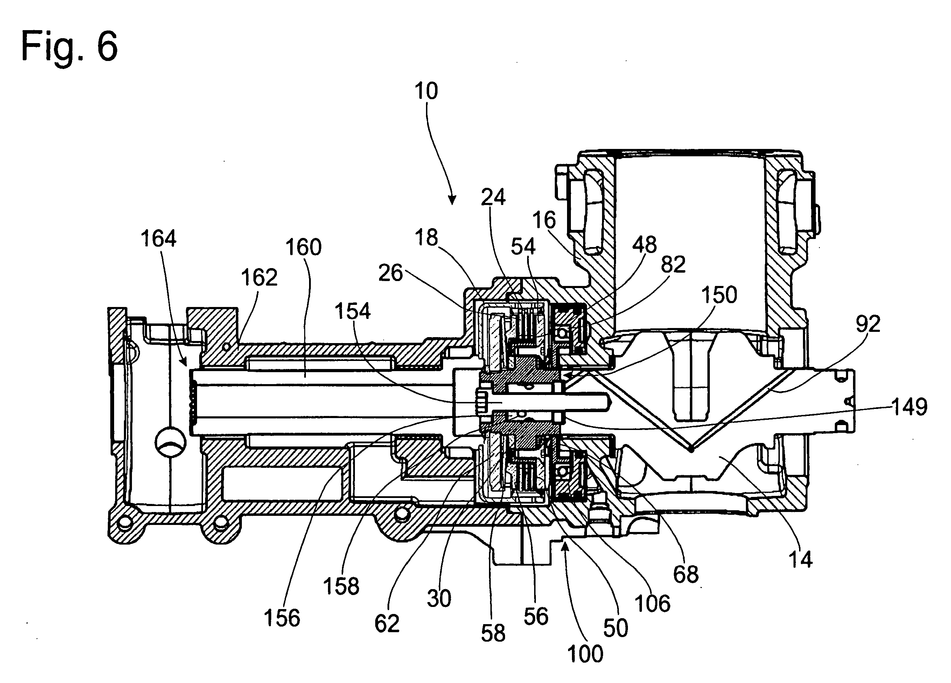

Eine alternative Ausgestaltungsform einer erfindungsgemäß aufgebauten Kopplungsanordnung 10 ist in Fig. 6 gezeigt. Man erkennt in der Fig. 6 deutlich das Gehäuse 16 des Kompressors, in welchem die als Kurbelwelle ausgebildete Eingangswelle 14 drehbar gelagert bzw. zu lagern ist. Anders als bei der vorangehend beschriebenen Ausgestaltungsform weist jedoch diese Eingangswelle 14 im Bereich der Ankopplung an den zweiten Reibelemententräger 30 keinen konischen Endbereich auf, sondern endet im Wesentlichen planar mit einer Stirnfläche 149 Zu dieser Stirnfläche 150 ist der Schmierfluidkanal 149 auch offen. Man erkennt, dass vor seiner Öffnung in der Stirnfläche 150 dieser Schmierfluidkanal 92 nach radial außen beispielsweise dort, wo die Eingangswelle 14 am Gehäuse 16 gelagert ist, offen ist, um auch dort eine Schmierwirkung beispielsweise für ein Gleitlager zu erzeugen. Es sei hier darauf hingewiesen, dass selbstverständlich bei dieser und auch den vorangehend beschriebenen Ausgestaltungsvarianten in der Eingangswelle 14 mehrere derartige Schmierfluidkanäle 92 vorgesehen sein können.

Die feste Verbindung der Eingangswelle 14 mit dem zweiten Reibelemententräger 30 erfolgt durch an einander zugewandt liegenden Bereichen derselben vorgesehene Axialverzahnungsformationen 150, die einen drehfesten Verbund nach Art einer Hirth-Verzahnung bilden können, wenn die Eingangswelle 14 und der zweite Reibelemententräger 30 axial aufeinander zubewegt sind. Der feste Zusammenhalt wird durch einen Schraubbolzen 154 gewährleistet, welcher koaxial zur Drehachse den zweiten Reibelemententräger 30 durchsetzt und in die Eingangswelle 14 eingeschraubt ist.

Man erkennt in der Fig. 6, dass der Schmierfluidkanal 92 an der Stirnfläche 149 in derartiger Positionierung im Wesentlichen axial offen ist, dass die Axialverzahnungsformationen 150 diesen im Bereich der Öffnung umgeben. Am gegenüberliegenden Bereich ist im zweiten Reibelemententräger 30 ein axial zur Eingangswelle 14 offener Hohlraum 156 ausgebildet, in welchem zumindest ein Teil des aus dem Schmierfluidkanal 92 austretenden Schmierfluids eintreten kann. Ein weiterer Teil kann sich nach radial außen unter Fliehkrafteinwirkung durch die Axialverzahnungsformationen 150 hindurchbewegen, wozu beispielsweise ein einen definierten Durchtrittsspalt einführendes Federelement im Übergangsbereich von der Eingangswelle 14 zu dem zweiten Reibelemententräger 30 angeordnet sein kann.

Der Hohlraum 156 ist über mehrere den zweiten Reibelemententräger 30 radial durchsetzende erste Öffnungen bzw. Kanäle 158 nach radial außen offen. Diese Öffnungen 158 liegen in dem axialen Bereich, in welchem am zweiten Reibelemententräger 30 die Außenverzahnung 48 vorgesehen ist. In den Hohlraum 156 eingetretenes und sich auch fliehkraftbedingt nach radial außen durch die Öffnung 158 hindurchbewegendes Schmierfluid gelangt somit unmittelbar in den Bereich der miteinander in Reibwechselwirkung stehenden und somit auch zu kühlenden Reibelemente 26 bzw. 50. Es sei hier darauf hingewiesen, dass die Öffnungen 158 in denjenigen Umfangsbereichen des zweiten Reibelemententrägers positioniert sind, in welchen dieser in radialer Richtung nicht durch Durchgriffsöffnungen für den Druckring 68 durchsetzt ist.

Man erkennt in Fig. 6 weiterhin noch, dass der erste Reibelemententräger 18 nicht unmittelbar mit einem Antriebsrad gekoppelt ist. Vielmehr ist dieser hier beispielsweise einteilig und beispielsweise aus Blechmaterial gefertigte erste Reibelemententräger 18 mit einer Übertragungshohlwelle 160 fest verbunden, die ein an das Gehäuse 16 des Kompressors 16 angesetztes Gehäuse 162 durchsetzt bzw. darin drehbar gelagert ist. Die Übertragungshohlwelle 160 weist an ihrem vom ersten Reibelemententräger 18 entfernten Ende ebenfalls eine Axialverzahnungsformation 164 auf, die mit einer entsprechenden Axialverzahnungsformation an einem Antriebsrad, also beispielsweise Zahnrad, in Drehkopplungseingriff bringbar ist. Durch die Übertragungshohlwelle 160 hindurch besteht die Möglichkeit des Zugriffs auf den Schraubbolzen 154, so dass dieser bei dem Ansetzen der bereits vormontierten Kopplungsanordnung 10 mit dem Gehäuse 162 an den Kompressor bzw. dessen Gehäuse 16 ohne zusätzliche Maßnahmen einfach in der Eingangswelle 14 eingeschraubt werden kann, um somit eine feste Verbindung der Kopplungsanordnung 10 mit dem Kompressor bzw. dessen Eingangswelle zu realisieren.

Es sei darauf hingewiesen, dass die beiden vorangehend beschriebenen Ausgestaltungsformen der Fig. 1 und 6 selbstverständlich auch miteinander kombiniert werden können, so könnte auch bei der Ausgestaltungsform der Fig. 1 der Druckfluidkanal 92 axial offen sein, beispielsweise an einer entsprechenden Stufenfläche der Eingangswelle 14. Bei der Ausgestaltungsform der Fig. 6 könnten die vorangehend mit Bezug auf die Fig. 1 beschriebenen Schmiermittelreservoirs im Bereich des Druckrings 68 bzw. auch des zweiten Reibelemententrägers 30 realisiert sein. Grundsätzlich sei darauf hingewiesen, dass bei der Ausgestaltungsform der Fig. 6 die Kopplungsanordnung 10 in gleicher Art und Weise zu betätigen ist, wie vorangehend beschrieben, also durch die Druckbeaufschlagung einer Zylinder/Kolben-Einheit der Betätigungskrafterzeugungsanordnung 100 und dabei Verschiebung des Druckrings 68 bzw. Entlastung der Anpressplate 56 vom Kraftspeicher 58.

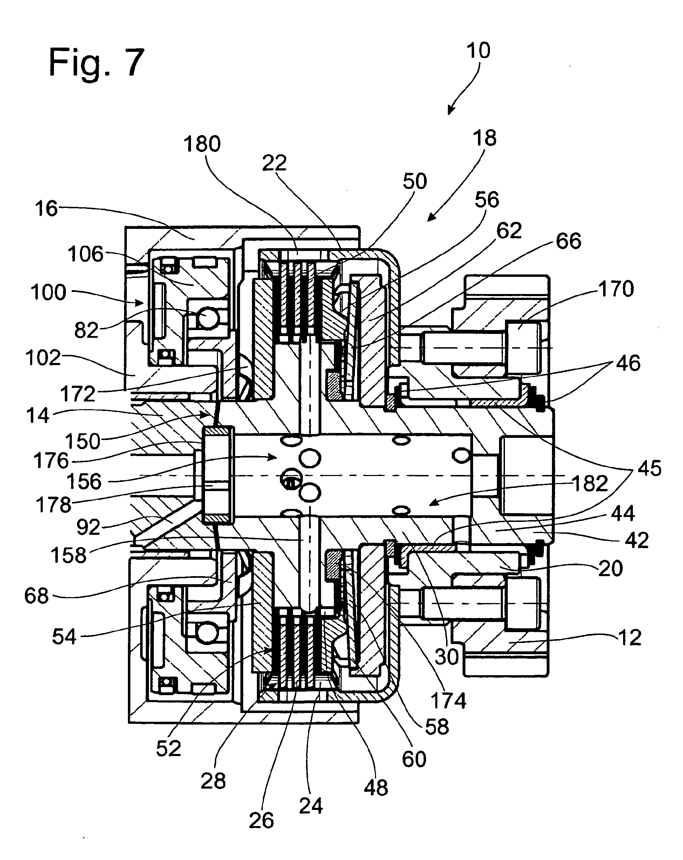

Eine Ausgestaltungsform, welche auf einer Kombination der Ausgestaltungsformen gemäß den Fig. 1 bis 5 einerseits und gemäß der Fig. 6 andererseits basiert, ist in Fig. 7 gezeigt. Man erkennt in Fig. 7, dass hier das Antriebsrad wieder unmittelbar am ersten Reibelemententräger 18 bzw. dem ersten Teil 20 desselben beispielsweise durch eine Mehrzahl von Schraubbolzen 170 festgelegt ist. Im Bereich dieses Antriebsrads 12 bzw. des ersten Teils 20 des ersten Reibelemententrägers 18 ist der zweite Reibelemententräger 30 mit seinem von der Eingangswelle 14 entfernt liegenden Endbereich bzw. Lagerabschnitt 42 gelagert. Hierzu dient die mit zwei Gleitlagerringen 45 ausgebildete Axial/Radial-Lageranordnung 44. Die beiden Gleitlagerringe 45 sind an ihren beiden axialen Stirnseiten durch Sicherungsringe 46 am zweiten Reibelemententräger 30 axial gesichert und halten somit dadurch, dass sie das erste Teil 20 des ersten Reibelemententrägers 18 nach radial außen übergreifen, dieses erste Teil 20 und mithin den gesamten ersten Reibelemententräger 18 in definierter Positionierung bezüglich des zweiten Reibelemententrägers 30.

Die Festlegung der gesamten Kopplungsanordnung über den zweiten Reibelemententräger 30 an der Eingangswelle 14 erfolgt wieder durch daran vorgesehene Axialverzahnungsformationen 150, die beispielsweise wieder nach Art einer Hirth-Verzahnung ausgebildet sein können. Nicht dargestellt ist in Fig. 7 der in Fig. 6 erkennbare Schraubbolzen, welcher den axialen Zusammenhalt gewährleistet und welcher in der Darstellung der Fig. 7 von rechts durch den zweiten Reibelemententräger 30 hindurch in die Eingangswelle 14 eingeschraubt werden kann.

Man erkennt in Fig. 7 weiterhin ein Federelement 172, welches zwischen der Widerlagerplatte 54 und einer dieser gegenüber liegenden Stirnseite des Druckrings 68 wirkt und diese Baugruppen voneinander weg belastet. Der Druckring 68 belastet über in den Fig. 6 und 7 nicht erkennbare den zweiten Reibelemententräger 30 axial durchgreifende Abschnitte einen dem radial inneren Bereich des Kraftspeichers 58 gegenüber liegenden weiteren Druckring 174. Dabei sind selbstverständlich die den zweiten Reibelemententräger 30 axial durchgreifenden Abschnitte in dafür vorgesehenen Aussparungen geführt, die entweder so gelegt sind, dass sie sich mit den näherungsweise radial sich erstreckenden Öffnungen 158 nicht schneiden. Grundsätzlich ist es auch denkbar, hier Überschneidungen zu erzeugen, so dass eine weitere Verzweigung von Öffnungen entsteht, die eine weitergehende Verteilung des eingeleiteten Fluids ermöglicht. Durch das Federelement 172 wird die Kolbenbaugruppe 106 in Richtung Minimierung des Zylinderkammervolumens, also in Richtung Ausrücken vorgespannt.

Durch einen beispielsweise im Übergangsbereich zwischen dem zweiten Reibelemententräger 30 und der Eingangswelle 14 radial innerhalb der Verzahnungsformationen 150 vorgesehenen Federring 176 kann eine gezielte Einflussnahme dahingehend, wie groß der Anteil des radial nach außen durch die mit axialem Zwischenraum in Eingriff stehenden Axialverzahnungsformationen 150 hindurchtretenden Fluids ist, vorgesehen werden. Der vorangehend mit Bezug auf die Ausgestaltungsform der Fig. 6 als Federelement bereits angesprochene Federring 176, der als offener Metall oder Kunststoffring ausgebildet sein kann, weist in einem Umfangsbereich einen Spalt 178 auf, durch welchen hindurch über den Kanal 92 zugeführtes Fluid nach radial außen und somit in den Bereich der Axialverzahnungsformationen 150 gelangen kann. Diese sind an anderen Umfangsbereichen durch den Federring 176, welcher sich unter Last nach radial außen anlegt, verdeckt. Durch die Breite dieses Spalts kann also die nach radial außen hindurchtretende Fluidmenge beeinflusst werden.

Man erkennt die ersten Öffnungen 158, welche von dem zentral angeordneten Hohlraum 156 im Wesentlichen radial nach außen führen und radial außen dort offen sind, wo auch die verschiedenen Reibelemente 50 bzw. 26 angeordnet sind. Das über diese ersten Öffnungen 158 nach radial außen strömende Fluid kann durch einen zwischen dem zweiten Teil 22 des ersten Reibelemententrägers 18 und einem diesen axial übergreifenden Bereich des Gehäuses 16 gebildeten ringartigen Zwischenraum zu einem Fluidsumpf austreten. Hierzu können beispielsweise auch im Bereich der Innenverzahnung 24 Öffnungen 180 im ersten Reibelemententräger 18 vorgesehen sein.

In axialem Abstand zu den ersten Öffnungen 158 sind am zweiten Reibelemententräger 30 zweite Öffnungen 182 vorgesehen. Diese liegen in einem axialen Bereich des zweiten Reibelemententrägers 30, in welchem dieser auch der Lagerung des ersten Reibelemententrägers dient, also von den beiden Gleitlagerhülsen 45 umgeben ist. Die zweiten Öffnungen 180 führen von dem zentralen Hohlraum 156 im Wesentlichen radial nach außen und führen somit Fluid in den Bereich, in welchem die Lageranordnung 44 bzw. deren Gleitlagerringe 45 wirksam sind. Fluid, das durch die zweiten Öffnungen 182 nach radial außen gelangt ist, kann beidseits der Lageranordnung 44 beispielsweise jeweils zwischen einem Lagerring 45 und einem Sicherungsring 46 nach radial außen abströmen und somit ebenfalls zu dem Fluidsumpf gelangen.

Durch die Vorgabe der Anzahl und des Strömungsquerschnitts der ersten Öffnungen 158 bzw. auch der zweiten Öffnungen 182 kann ein definierter Einfluss darauf genommen werden, wie insbesondere auch unter Fliehkrafteinfluss das in den Hohlraum 156 gelangte Fluid nach radial außen strömen kann. Es lässt sich somit insbesondere eine Verteilung des in den verschiedenen axialen Bereichen zur Schmierung zur Verfügung stehenden bzw. genutzten Fluidanteils entsprechend den auftretenden Anforderungen erreichen.

## Patentansprüche

1. Kopplungsanordnung zur wahlweisen Drehkopplung einer Eingangswelle, insbesondere eines Kompressors in einem Fahrzeug, mit einem Antriebsorgan, insbesondere Antriebsrad, umfassend:
- einen mit dem Antriebsrad (12) zur gemeinsamen Drehung um eine Drehachse (A) gekoppelten oder zu koppelnden ersten Reibelemententräger (18), mit welchem die Reibelemente (26) einer ersten Gruppe (28) von Reibelementen drehfest gekoppelt sind,
- einen mit der Eingangswelle (14) zur gemeinsamen Drehung um die Drehachse (A) gekoppelten oder zu koppelnden zweiten Reibelemententräger (30), mit welchem die Reibelemente (50) einer zweiten Gruppe (52) von Reibelementen drehfest gekoppelt sind,
- an einer in Richtung von einem freien Ende (34) der Eingangswelle (14) weg weisenden ersten axialen Seite der beiden Gruppen (28, 52) von Reibelementen eine bezüglich des zweiten Reibelemententrägers (30) axial abgestützte Widerlagerplatte (54),
- an einer in Richtung freies Ende (34) der Eingangswelle (14) weisenden zweiten axialen Seite der beiden Gruppen (28, 52) von Reibelementen eine durch einen Kraftspeicher (58) in Richtung auf die Reibelemente (26, 50) zu beaufschlagte Anpressplatte (56), und
- eine Betätigungskrafterzeugungsanordnung (100),
wobei in der Eingangswelle (14) wenigstens ein Schmierfluidkanal (92) mit einem nach radial außen offenen Abgabeende vorgesehen ist zur Abgabe von Schmierfluid in dem Bereich der Kopplungsanordnung (10), **dadurch gekennzeichnet, dass** ein Betätigungskraftübertragungsorgan (68) in einem an der ersten axialen Seite der beiden Gruppen (28, 52) von Reibelementen liegenden Bereich zur Durchführung von Betätigungsvorgängen mit der Betätigungskrafterzeugungsanordnung (100) zusammenwirkt und in einem an der zweiten axialen Seite der beiden Gruppen (28, 52) von Reibelementen liegenden Bereich mit dem Kraftspeicher (58) zu dessen Betätigung zusammenwirkt, wobei das Betätigungskraftübertragungsorgan (68) ein Schmierfluid von dem wenigstens einen Schmierfluidkanal (92) in der Eingangswelle (14) aufnehmendes erstes Schmierfluidreservoir (94) begrenzt.

2. Kopplungsanordnung nach Anspruch 1,
**dadurch gekennzeichnet, dass** das Betätigungskraftübertragungsorgan (68) einen das erste Schmierfluidreservoir (94) begrenzenden ringartigen Körperbereich (70) aufweist, von welchem wenigstens ein den zweiten Reibelemententräger (30) axial durchgreifender Betätigungsabschnitt (72, 74; 84, 86, 88, 90) ausgeht.

3. Kopplungsanordnung nach Anspruch 1 oder 2,
**dadurch gekennzeichnet, dass** der zweite Reibelemententräger (30) mit einem das Betätigungskraftübertragungsorgan (68) im Bereich des ersten Schmierfluidreservoirs (94) umgebenden Bereich ein zweites Schmierfluidreservoir (96) begrenzt.

4. Kopplungsanordnung nach Anspruch 1 und Anspruch 3,
**dadurch gekennzeichnet, dass** im Betätigungskraftübertragungsorgan (68) wenigstens eine Verbindungsöffnung (91) eine Fluidverbindung zwischen dem ersten Schmierfluidreservoir (94) und dem zweiten Schmierfluidreservoir (96) vorsieht.

5. Kopplungsanordnung nach Anspruch 3 oder 4,
**dadurch gekennzeichnet, dass** im zweiten Reibelemententräger (30) wenigstens eine Schmierfluidabgabeöffnung (98) vorgesehen ist zur Abgabe von Schmierfluid aus dem zweiten Schmierfluidreservoir (96) in den Bereich der Reibelemente (26, 50).

6. Kopplungsanordnung nach Anspruch 4 oder 5,
**dadurch gekennzeichnet, dass** das erste Schmierfluidreservoir (94) von einem Schmierfluid aus dem wenigstens einen Schmierfluidkanal (92) in der Eingangswelle (14) aufnehmenden axialen Bereich in Richtung zu der wenigstens einen Verbindungsöffnung (91) sich radial erweiternd ausgebildet ist.

7. Kopplungsanordnung nach Anspruch 6,
**dadurch gekennzeichnet, dass** das erste Schmierfluidreservoir (94) in einem axialen Endbereich desselben, welcher dem Bereich der Zusammenwirkung des Betätigungskraftübertragungsorgans (68) mit der Betätigungskrafterzeugungsanordnung (100) nahe liegt, axial offen ist.

8. Kopplungsanordnung nach Anspruch 6 oder 7,
**dadurch gekennzeichnet, dass** das zweite Schmierfluidreservoir (96) sich in derselben axialen Richtung radial erweiternd ausgebildet ist, wie das erste Schmierfluidreservoir (94).

9. Kopplungsanordnung nach einem der Ansprüche 1 bis 8,
**dadurch gekennzeichnet, dass** der erste Reibelemententräger (18) am zweiten Reibelemententräger (30) axial und radial gelagert ist.

10. Kopplungsanordnung nach Anspruch 9 und Anspruch 1 oder/und 3,
**dadurch gekennzeichnet, dass** das erste Schmierfluidreservoir (94) oder/und das zweite Schmierfluidreservoir (96) über eine Verbindungskanalanordnung (142) zu dem Bereich der Lagerung des ersten Reibelemententrägers (18) an dem zweiten Reibelemententräger (30) offen ist.

11. Kopplungsanordnung nach Anspruch 10 und Anspruch 2,
**dadurch gekennzeichnet, dass** die Verbindungskanalanordnung wenigstens eine Öffnung (76, 78) in dem zweiten Reibelemententräger (30) umfasst, durch welche ein Betätigungsabschnitt (72, 74) des Betätigungskraftübertragungsorgans (68) axial hindurchgreift.

12. Kopplungsanordnung nach einem der Ansprüche 1 bis 11,
**dadurch gekennzeichnet, dass** der wenigstens eine Schmierfluidkanal (92) nach radial außen offen ist.

13. Kopplungsanordnung nach einem der Ansprüche 1 bis 11,
**dadurch gekennzeichnet, dass** der wenigstens eine Schmierfluidkanal (92) axial offen ist.

14. Kopplungsanordnung nach Anspruch 13,
**dadurch gekennzeichnet, dass** der zweite Reibelemententräger (30) und die Eingangswelle (14) durch daran jeweils vorgesehene Axialverzahnungsformationen (150) in Drehkopplungseingriff zu bringen sind.

15. Kopplungsanordnung nach Anspruch 14,
**dadurch gekennzeichnet, dass** der wenigstens eine Schmierfluidkanal (92) zu einer von den Axialverzahnungsformationen (150) umgebenen Stirnfläche (149) der Eingangswelle (14) offen ist.

16. Kopplungsanordnung nach Anspruch 15,
**dadurch gekennzeichnet, dass** der zweite Reibelemententräger (30) in einem an die Stirnfläche (149) angrenzenden Bereich einen Hohlraum (156) zur Aufnahme von Schmierfluid aus dem wenigstens einen Schmierfluidkanal (92) aufweist.

17. Kopplungsanordnung nach Anspruch 16,
**dadurch gekennzeichnet, dass** der Hohlraum (156) über eine Mehrzahl erster Öffnungen (158) nach radial außen zu dem Bereich der mit dem zweiten Reibelemententräger (30) drehfesten Reibelemente (50) offen ist.

18. Kopplungsanordnung nach Anspruch 17,
**dadurch gekennzeichnet, dass** die ersten Öffnungen (158) im axialen Bereich der Reibelemente (26, 50) vorgesehen sind.

19. Kopplungsanordnung nach Anspruch 9 und einem der Ansprüche 16 oder 17,
**dadurch gekennzeichnet, dass** der Hohlraum (156) über eine Mehrzahl zweiter Öffnungen (180) nach radial außen zu dem Bereich der Lagerung des ersten Reibelemententrägers (18) am zweiten Reibelemententräger (30) offen ist.

20. Kopplungsanordnung nach Anspruch 19,
**dadurch gekennzeichnet, dass** die zweiten Öffnungen (180) im axialen Bereich der Lagerung vorgesehen sind.

21. Kopplungsanordnung nach einem der Ansprüche 14 bis 20,
**dadurch gekennzeichnet, dass** die Axialverzahnungsformationen (150) unter Erzeugung eines einen Fluiddurchtritt zulassenden Zwischenraums in Drehkopplungseingriff miteinander stehen.

22. Kopplungsanordnung nach Anspruch 9 und einem der Ansprüche 10 bis 21, sofern auf Anspruch 9 rückbezogen,
**dadurch gekennzeichnet, dass** der erste Reibelemententräger (18) über eine Gleitlageranordnung (44, 45) am zweiten Reibelemententräger (30) gelagert ist.

## Claims

1. Clutch assembly for selective rotary coupling of an input shaft, especially that of a compressor in a vehicle, to a drive member, especially a drive wheel, comprising:
- a first friction element carrier (18), which is coupled or to be coupled to the drive wheel (12) for common rotation around a rotational axis (A) and to which the friction elements (26) of a first group (28) of friction elements are coupled for conjoint rotation,
- a second friction element carrier (30), which is coupled or to be coupled to the input shaft (14) for common rotation around the rotational axis (A) and to which the friction elements (50) of a second group (52) of friction elements are coupled for conjoint rotation,
- an abutment plate (54) supported axially with respect to the second friction element carrier (30) on a first axial side of the two groups (28, 52) of friction elements, said axial side facing away from a free end (34) of the input shaft (14),
- a contact pressure plate (56), which is acted upon in the direction of the friction elements (26, 50) by an energy storage device (58) on a second axial side of the two groups (28, 52) of friction elements, said side facing in the direction of the free end (34) of the input shaft (14), and
- an actuating-force generating arrangement (100),
at least one lubricating-fluid duct (92) having a discharge end that is open radially outwards being provided in the input shaft (14) for the purpose of discharging lubricating fluid in the region of the clutch assembly (10),
**characterized in that** an actuating-force transmission member (68) interacts with the actuating-force generating arrangement (100) in a region situated on the first axial side of the two groups (28, 52) of friction elements in order to carry out actuating processes, and interacts with the energy storage device (58) in a region situated on the second axial side of the two groups (28, 52) of friction elements in order to actuate said energy storage device, the actuating-force transmission member (68) delimiting a first lubricating-fluid reservoir (94), which receives lubricating fluid from the at least one lubricating-fluid duct (92) in the input shaft (14).

2. Clutch assembly according to Claim 1, **characterized in that** the actuating-force transmission member (68) has an annular body region (70), which delimits the first lubricating-fluid reservoir (94) and from which at least one actuating portion (72, 74; 84, 86, 88, 90) that passes axially through the second friction element carrier (30) starts.

3. Clutch assembly according to Claim 1 or 2, **characterized in that** the second friction element carrier (30) delimits a second lubricating-fluid reservoir (96) by means of a region surrounding the actuating-force transmission member (68) in the region of the first lubricating-fluid reservoir (94).

4. Clutch assembly according to Claim 1 and Claim 3, **characterized in that** at least one connecting opening (91) in the actuating-force transmission member (68) provides a fluid connection between the first lubricating-fluid reservoir (94) and the second lubricating-fluid reservoir (96).

5. Clutch assembly according to Claim 3 or 4, **characterized in that** at least one lubricating-fluid discharge opening (98) is provided in the second friction element carrier (30) in order to discharge lubricating fluid from the second lubricating-fluid reservoir (96) into the region of the friction elements (26, 50).

6. Clutch assembly according to Claim 4 or 5, **characterized in that** the first lubricating-fluid reservoir (94) is designed to widen radially from an axial region receiving lubricating fluid from the at least one lubricating-fluid duct (92) in the input shaft (14) in the direction of the at least one connecting opening (91).

7. Clutch assembly according to Claim 6, **characterized in that** the first lubricating-fluid reservoir (94) is axially open in an axial end region thereof which is close to the region of the interaction of the actuating-force transmission member (68) with the actuating-force generating arrangement (100).

8. Clutch assembly according to Claim 6 or 7, **characterized in that** the second lubricating-fluid reservoir (96) is designed to widen radially in the same axial direction as the first lubricating-fluid reservoir (94).

9. Clutch assembly according to one of Claims 1 to 8, **characterized in that** the first friction element carrier (18) is supported axially and radially on the second friction element carrier (30).

10. Clutch assembly according to Claim 9 and Claim 1 and/or 3,
**characterized in that** the first lubricating-fluid reservoir (94) and/or the second lubricating-fluid reservoir (96) is open via a connecting-duct arrangement (142) to the region of support of the first friction element carrier (18) on the second friction element carrier (30).

11. Clutch assembly according to Claim 10 and Claim 2, **characterized in that** the connecting-duct arrangement comprises at least one opening (76, 78) in the second friction element carrier (30), through which an actuating portion (72, 74) of the actuating-force transmission member (68) passes axially.

12. Clutch assembly according to one of Claims 1 to 11,
**characterized in that** the at least one lubricating-fluid duct (92) is open radially outwards.

13. Clutch assembly according to one of Claims 1 to 11,
**characterized in that** the at least one lubricating-fluid duct (92) is axially open.

14. Clutch assembly according to Claim 13, **characterized in that** the second friction element carrier (30) and the input shaft (14) can be brought into rotary coupling engagement by respective axial toothing formations (150) provided thereon.

15. Clutch assembly according to Claim 14, **characterized in that** the at least one lubricating-fluid duct (92) is open to an end face (149) of the input shaft (14), said end face being surrounded by the axial toothing formations (150).

16. Clutch assembly according to Claim 15, **characterized in that** the second friction element carrier (30) has a cavity (156) in a region adjoining the end face (149) for the purpose of receiving lubricating fluid from the at least one lubricating-fluid duct (92).

17. Clutch assembly according to Claim 16, **characterized in that** the cavity (156) is open radially outwards, by virtue of a plurality of first openings (158), to the region of the friction elements (50) connected to the second friction element carrier (30) for conjoint rotation therewith.

18. Clutch assembly according to Claim 17, **characterized in that** the first openings (158) are provided in the axial region of the friction elements (26, 50).

19. Clutch assembly according to Claim 9 and one of Claims 16 or 17,
**characterized in that** the cavity (156) is open radially outwards, by virtue of a plurality of second openings (180), to the region of support of the first friction element carrier (18) on the second friction element carrier (30).

20. Clutch assembly according to Claim 19, **characterized in that** the second openings (180) are provided in the axial region of support.

21. Clutch assembly according to one of Claims 14 to 20,
**characterized in that** the axial toothing formations (150) are in rotary coupling engagement with one another and thereby produce an interspace which allows fluid to pass through.

22. Clutch assembly according to Claim 9 and one of Claims 10 to 21, insofar as referred back to Claim 9,
**characterized in that** the first friction element carrier (18) is supported on the second friction element carrier (30) by means of a sliding bearing arrangement (44, 45).

## Revendications

1. Agencement d'accouplement pour l'accouplement rotatif sélectif d'un arbre d'entrée, en particulier d'un compresseur dans un véhicule, comprenant un organe d'entraînement, en particulier une roue motrice, comprenant :
- un premier support d'éléments de friction (18) accouplé ou à accoupler à la roue motrice (12) en vue d'une rotation conjointe autour d'un axe de rotation (A), avec lequel les éléments de friction (26) d'un premier groupe (28) d'éléments de friction sont accouplés de manière solidaire en rotation,
- un deuxième support d'éléments de friction (30) accouplé ou à accoupler à l'arbre d'entrée (14) en vue d'une rotation conjointe autour de l'axe de rotation (A), avec lequel les éléments de friction (50) d'un deuxième groupe (52) d'éléments de friction sont accouplés de manière solidaire en rotation,
- une plaque de butée (54) supportée axialement par rapport au deuxième support d'éléments de friction (30) sur un premier côté axial des deux groupes (28, 52) d'éléments de friction tourné dans la direction opposée à une première extrémité libre (34) de l'arbre d'entrée (14),
- une plaque de pressage (56) pouvant être sollicitée par un accumulateur de force (58) dans la direction des éléments de friction (26, 50), sur un deuxième côté axial des deux groupes (28, 52) d'éléments de friction tourné dans la direction de l'extrémité libre (34) de l'arbre d'entrée (14), et
- un agencement de génération de force d'actionnement (100),
au moins un conduit de fluide lubrifiant (92) avec une extrémité de distribution ouverte radialement vers l'extérieur étant prévu dans l'arbre d'entrée (14), pour distribuer du fluide lubrifiant dans la région de l'agencement d'accouplement (10), **caractérisé en ce qu'**un organe de transfert de force d'actionnement (68) coopère avec l'agencement de génération de force d'actionnement (100) dans une région située sur le premier côté axial des deux groupes (28, 52) d'éléments de friction pour effectuer des opérations d'actionnement, et coopère avec l'accumulateur de force (58) dans une région située sur le deuxième côté axial des deux groupes (28, 52) d'éléments de friction en vue de son actionnement, l'organe de transfert de force d'actionnement (68) limitant un premier réservoir de fluide lubrifiant (94) recevant du fluide lubrifiant depuis l'au moins un conduit de fluide lubrifiant (92) dans l'arbre d'entrée (14).

2. Agencement d'accouplement selon la revendication 1,
**caractérisé en ce que** l'organe de transfert de force d'actionnement (68) présente une région de corps (70) de forme annulaire limitant le premier réservoir de fluide lubrifiant (94), depuis laquelle part au moins une portion d'actionnement (72, 74 ; 84, 86, 88, 90) venant en prise axialement à travers le deuxième support d'éléments de friction (30).

3. Agencement d'accouplement selon la revendication 1 ou 2,
**caractérisé en ce que** le deuxième support d'éléments de friction (30) limite un deuxième réservoir de fluide lubrifiant (96) avec une région entourant l'organe de transfert de force d'actionnement (68) dans la région du premier réservoir de fluide lubrifiant (94).

4. Agencement d'accouplement selon la revendication 1 et la revendication 3,
**caractérisé en ce que** dans l'organe de transfert de force d'actionnement (68) au moins une ouverture de liaison (91) assure une liaison fluidique entre le premier réservoir de fluide lubrifiant (94) et le deuxième réservoir de fluide lubrifiant (96).

5. Agencement d'accouplement selon la revendication 3 ou 4,
**caractérisé en ce qu'**au moins une ouverture de distribution de fluide lubrifiant (98) est prévue dans le deuxième support d'éléments de friction (30), pour distribuer du fluide lubrifiant depuis le deuxième réservoir de fluide lubrifiant (96) dans la région des éléments de friction (26, 50).

6. Agencement d'accouplement selon la revendication 4 ou 5,
**caractérisé en ce que** le premier réservoir de fluide lubrifiant (94) est réalisé de manière à s'élargir radialement depuis une région axiale recevant du fluide lubrifiant depuis l'au moins un conduit de fluide lubrifiant (92) dans l'arbre d'entrée (14) dans la direction de l'au moins une ouverture de liaison (91).

7. Agencement d'accouplement selon la revendication 6,
**caractérisé en ce que** le premier réservoir de fluide lubrifiant (94) est ouvert axialement dans une région d'extrémité axiale de celui-ci, laquelle est située à proximité de la région de coopération de l'organe de transfert de force d'actionnement (68) avec l'agencement de génération de force d'actionnement (100).

8. Agencement d'accouplement selon la revendication 6 ou 7,
**caractérisé en ce que** le deuxième réservoir de fluide lubrifiant (96) est réalisé de manière à s'élargir radialement dans la même direction axiale que le premier réservoir de fluide lubrifiant (94).

9. Agencement d'accouplement selon l'une quelconque des revendications 1 à 8,
**caractérisé en ce que** le premier support d'éléments de friction (18) est monté axialement et radialement sur deux supports d'éléments de friction (30).

10. Agencement d'accouplement selon la revendication 9 et la revendication 1 et/ou 3,
**caractérisé en ce que** le premier réservoir de fluide lubrifiant (94) et/ou le deuxième réservoir de fluide lubrifiant (96) sont ouverts par le biais d'un agencement de conduite de liaison (142) vers la région du support sur palier du premier support d'éléments de friction (18) sur le deuxième support d'éléments de friction (30).

11. Agencement d'accouplement selon la revendication 10 et la revendication 2,
**caractérisé en ce que** l'agencement de conduite de liaison comprend au moins une ouverture (76, 78) dans le deuxième support d'éléments de friction (30), à travers laquelle une portion d'actionnement (72, 74) de l'organe de transfert de force d'actionnement (68) vient en prise axialement.

12. Agencement d'accouplement selon l'une quelconque des revendications 1 à 11,
**caractérisé en ce que** l'au moins un conduit de fluide lubrifiant (92) est ouvert radialement vers l'extérieur.

13. Agencement d'accouplement selon l'une quelconque des revendications 1 à 11,
**caractérisé en ce que** l'au moins un conduit de fluide lubrifiant (92) est ouvert axialement.

14. Agencement d'accouplement selon la revendication 13,
**caractérisé en ce que** le deuxième support d'éléments de friction (30) et l'arbre d'entrée (14) peuvent être amenés en engagement d'accouplement rotatif par des formations de dentures axiales (150) prévues respectivement sur ceux-ci.

15. Agencement d'accouplement selon la revendication 14,
**caractérisé en ce que** l'au moins un conduit de fluide lubrifiant (92) est ouvert vers une surface frontale (149) de l'arbre d'entrée (14) entourée par les formations de dentures axiales (150).

16. Agencement d'accouplement selon la revendication 15,
**caractérisé en ce que** le deuxième support d'éléments de friction (30) présente dans une région adjacente à la surface frontale (149) une cavité (156) pour recevoir du fluide lubrifiant depuis l'au moins un conduit de fluide lubrifiant (92).

17. Agencement d'accouplement selon la revendication 16,
**caractérisé en ce que** la cavité (156) est ouverte par le biais d'une pluralité de premières ouvertures (158) radialement vers l'extérieur vers la région des éléments de friction (50) solidaires en rotation avec le deuxième support d'éléments de friction (30).

18. Agencement d'accouplement selon la revendication 17,
**caractérisé en ce que** les premières ouvertures (158) sont prévues dans la région axiale des éléments de friction (26, 50).

19. Agencement d'accouplement selon la revendication 9 et l'une quelconque des revendications 16 ou 17, **caractérisé en ce que** la cavité (156) est ouverte par le biais d'une pluralité de deuxièmes ouvertures (180) radialement vers l'extérieur vers la région du support sur palier du premier support d'éléments de friction (18) sur le deuxième support d'éléments de friction (30).

20. Agencement d'accouplement selon la revendication 19,
**caractérisé en ce que** les deuxièmes ouvertures (180) sont prévues dans la région axiale du support sur palier.

21. Agencement d'accouplement selon l'une quelconque des revendications 14 à 20,
**caractérisé en ce que** les formations de dentures axiales (150) sont en engagement d'accouplement rotatif les unes avec les autres en créant un espace intermédiaire permettant le passage d'un fluide.

22. Agencement d'accouplement selon la revendication 9 et l'une quelconque des revendications 10 à 21, dans la mesure où elles se rapportent à la revendication 9,
**caractérisé en ce que** le premier support d'éléments de friction (18) est monté par le biais d'un agencement de palier lisse (44, 45) sur le deuxième support d'éléments de friction (30).
